# EUROPEAN PATENT SPECIFICATION

(11) **EP 2 290 494 B1**
(45) Date of publication and mention of the grant of the patent: **29.04.2020**
(21) Application number: 09169186.5
(22) Date of filing: 01.09.2009
(51) Int. Cl.: G06F 1/24

(54) **Mobile wireless communications device with reset function and related methods**
Mobile drahtlose Kommunikationsvorrichtung mit Zurückstellungsfunktion und zugehörige Verfahren
Dispositif de communications sans fil mobiles doté d'une fonction de réinitialisation et procédés correspondants

(43) Date of publication of application: 02.03.2011
(73) Proprietor: BlackBerry Limited, Waterloo, ON N2K 0A7 (CA)
(72) Inventor: Wilson, Matthew Iain, Kanata Ontario K2K 3K1 (CA)
(74) Representative: Hanna Moore + Curley

(56) References cited:
- JP-A- 2008 041 059
- US-A1- 2006 112 263
- US-A1- 2007 050 685
- DATABASE WPI Week 199645 Thomson Scientific, London, GB; AN 1996-452304 XP002570207 -& JP 08 227328 A (CANON KK) 3 September 1996 (1996-09-03)

## Description

### Technical Field

The present invention relates to the field of wireless communications, and, more particularly, to a mobile wireless communications device and related methods.

### Background

Mobile communications devices, including but not limited to cell phones, have become an integral part of society over the last two decades. On occasion, a mobile communication device may suffer a serious software error (sometimes called a fatal software error), which can be resolved by a reset operation. In early devices, a user could typically accomplish this reset operation by removing the power supply, i.e. a "battery pull" procedure. To avoid the inconvenience of the battery pull procedure, some manufacturers provided a reset switch that provided similar functionality, and other manufacturers made the reset function accessible via a software command. A reset operation in which the entire system is reset is often called a "hard reset operation" or a "full reset operation."

The typical mobile communications device may include many integrated circuits (ICs) therein, for example, a processor such as a central processing unit (CPU), a power management circuit, and a graphics processing unit (GPU) driving a display for the device. Each of these ICs is supplied with power controlled by the power management circuit. When the device is reset, the power supplied to each of these ICs is cycled off and on, thereby resetting all the ICs. Nonetheless, when these ICs are reset, the device may have a lengthy reboot time, thereby inconveniencing the user.

US 2006/0112263 relates to a computer reset method activated by a South Bridge to directly reset a Central Processing Unit (CPU). First, a trigger signal is received. A CPU reset signal is delivered by the South Bridge when receiving the trigger signal. Thereafter, the CPU is reset when receiving the CPU reset signal from the South Bridge via a North Bridge.

The present invention is set out in the independent claims, with some optional features set out in the claims dependent thereto.

### Brief Description of the Drawings

FIG. 1 is a front view of a mobile wireless communications device according to the present disclosure.
FIG. 2 is a schematic block diagram of the mobile wireless communications device of FIG 1.
FIG. 3 is a flowchart illustrating operation of the mobile wireless communications device of FIG 1.
FIG. 4 is another flowchart illustrating operation of the mobile wireless communications device of FIG 1.
FIG. 5 is a schematic circuit diagram of a portion of the mobile wireless communications device of FIG 1.

### Detailed Description of the Embodiments

In some cases, a mobile wireless communications device does not need a hard/full reset. Rather than resetting all or most of the systems, perhaps a few subsystems may be reset. Perhaps, only the CPU needs to be reset, for example. In such cases, a partial reset (or fast reset) may be performed. Positively, the partial reset feature may provide a mobile wireless communications device reset that is shorter in duration than a hard/full reset. A potential drawback to the partial reset of the CPU may be that other subsystems that do not need to be reset are adversely affected. Resetting a CPU, for example, may cause all of the CPU output pins to return to their default values. A return to the defaults values typically includes resetting the GPU, thereby causing the display to be changed, for example, the display may flicker or blank out.

As described below, a processor, such as a CPU, may be resettable along with the GPU, and the processor also may be partially resettable without resetting the GPU. When the processor is reset without resetting the GPU, a change in the display of the device can be avoided. This concept will be described in the context of a mobile wireless communications device, which may include a display, and a graphics processing unit (GPU). The GPU is resettable and an undesirable change in the output of the display occurs, such as a flickering or a blanking, when the display is reset. The mobile wireless communications device also includes a wireless transceiver, and a processor cooperating with the GPU and the wireless transceiver for wireless communications. The processor may be resettable along with the GPU, and the processor also may be partially resettable without resetting the GPU to avoid a change in the display.

The mobile wireless communications device may further include a power management circuit for shutting down power to the GPU and the processor during resets thereof, but maintaining power to the GPU and the processor during a partial reset of the processor. The processor may have an output generating a GPU reset signal during the partial reset of the processor. The power management circuit may have an output generating a GPU reset hold signal. The mobile wireless communications device may further comprise a logic circuit receiving as inputs the GPU reset signal and the GPU reset hold signal and outputting a reset control signal to the GPU.

In some embodiments, the logic circuit may comprise an OR gate. The mobile wireless communications device may further comprise a rechargeable power supply coupled to the display, the GPU, the wireless transceiver, and the processor, and a housing carrying the display, the GPU, the wireless transceiver, and the processor. For example, the display may comprise a liquid crystal display, and the wireless transceiver may comprise a wireless cellular telephone transceiver.

Another aspect is directed to a method for making a mobile wireless communications device. The method may include coupling a GPU to a display, the GPU being resettable and causing a change in the display when reset, and coupling a processor to the GPU and a wireless transceiver for wireless communications. The processor may be resettable along with the GPU, and the processor also may be partially resettable without resetting the GPU to avoid a change in the display.

Another aspect is directed to a method of operating a mobile wireless communications device including a display, a graphics processing unit (GPU) being resettable and causing a change in the display when reset, a wireless transceiver, and a processor cooperating with the GPU and the wireless transceiver for wireless communications and being resettable along with the GPU. The method may include partially resetting the processor without resetting the GPU to avoid a change in the display.

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements in alternative embodiments.

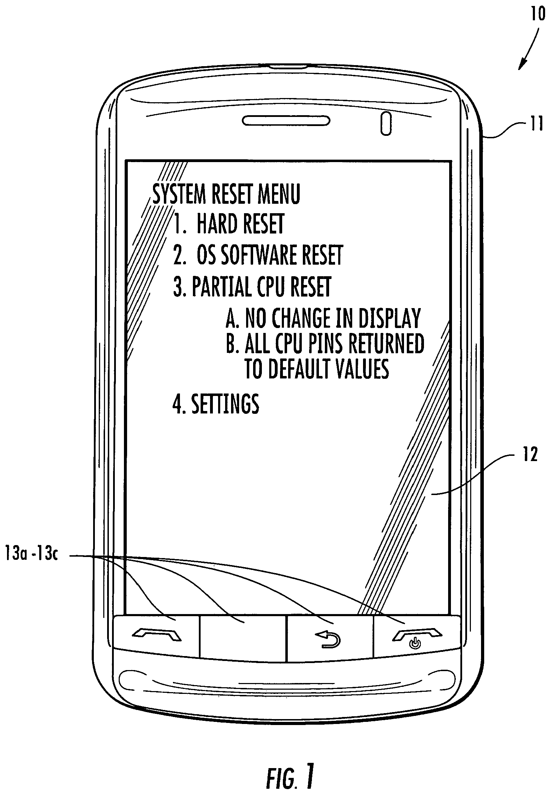

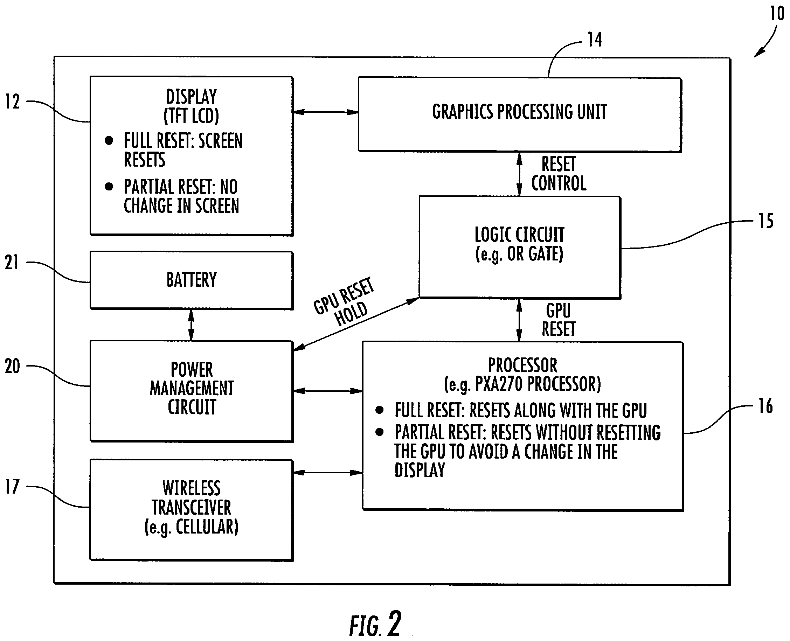

Referring initially to FIGS. 1-2, a mobile wireless communications device **10** illustratively includes a display **12,** and a graphics processing unit (GPU) **14** cooperating therewith to provide a graphical user interface to a user. The display **12** may comprise, for example, a transmissive thin film transistor liquid crystal display (LCD). The mobile wireless communications device **10** illustratively includes a processor **16,** and a wireless transceiver **17** coupled thereto. The processor **16** may comprise, for example, a Marvell Tavor PV processor, as available from Marvell Semiconductor, Inc. of Santa Clara, CA. In certain embodiments, the wireless transceiver **17** may comprise a cellular transceiver, for example, a Global System for Mobile communications (GSM), a code division multiple access (CDMA) transceiver, and/or a Universal Mobile Telecommunications System Wideband Code Division Multiple Access (UMTS W-CDMA).

The mobile wireless communications device **10** illustratively includes a power management circuit **20** coupled to the processor **16,** and a rechargeable power source, illustrated as a battery **21.** The battery **21** is illustratively coupled to the power management circuit **20,** the GPU **14,** the display **12,** the wireless transceiver **17,** and the processor **16.** Also, the mobile wireless communication device **10** illustratively includes a housing **11** carrying the display **12,** the GPU **14,** the wireless transceiver **17,** the battery **21,** the power management circuit **20,** and the processor **16.** The mobile wireless communications device **10** illustratively includes a plurality of switches **13a-13c** affixed to an outer surface of the housing **11.**

Further, the mobile wireless communications device **10** further illustratively includes a logic circuit **15** coupled between the processor **16** and the GPU **14,** and between the power management circuit **20** and the GPU. As will be appreciated by those skilled in the art, the mobile wireless communications device **10** includes a plurality of power lines (power rails) providing power to each of the integrated circuits (ICs).

During operation, the processor **16** cooperates with the GPU **14** and the wireless transceiver **17** for wireless communications and other mobile wireless functions, for example, GPS navigation and Internet applications. Also, as may be desirable during certain operations, the processor **16** may reset the GPU **14,** thereby causing a change in the display **12** when reset, i.e. a flickering or blanking of the display. The processor **16** is resettable along with the GPU **14.** More particularly, during a hard/full reset procedure, the power management circuit **20** may disable the power lines to all IC circuits, causing each IC circuit to reset, i.e. the power management circuit shuts down power to the GPU **14** and the processor **16** during resets thereof.

Advantageously, the processor **16** also may be partially resettable without resetting the GPU **14.** In other words, the processor **16** may access a command to reset itself without disruption of power supply from the power management circuit **20** to any of the other IC circuits. In some embodiments, the processor **16** may access a command to reset itself automatically without a command from the user. Further to this point, during the partial reset operation of the processor **16,** the power management circuit **20** maintains power to the GPU **14** and the processor **16.** Nonetheless, during the partial reset operation of the processor **6,** the processor returns all pin outputs to default values. For example, the GPU reset output pin would return to a default low value, which in the typical device would reset the GPU and display and may be described as high or low, but this is for convenience of explanation, and the concepts described herein are not necessarily limited to particular logical values.

In this mobile wireless communications device **10,** the GPU reset signal received from the GPU reset output pin of the processor **16** is fed into the logic circuit **15.** The power management circuit **20** illustratively provides a GPU reset hold signal, which is also input in the logic circuit **15.** The output of the logic circuit **15** is coupled to a reset pin of the GPU **14** and provides a reset control signal. Advantageously, during the partial reset operation of the processor **16,** the logic circuit **15** maintains the output to a high value even though the GPU reset signal from the processor goes to a low value, thereby preventing the GPU **14** and display **12** from resetting, i.e. this avoids any flickering or blanking of the display during the partial reset.

In some embodiments, the logic circuit **15** may comprise an OR gate. More particularly, the OR gate may receive the GPU reset signal from the processor **16** and the GPU reset hold signal from the power management circuit **20.** During the partial reset operation, the processor **16** GPU reset signal goes to a low value and is OR'ed with the GPU reset hold signal of the power management circuit **20,** for example, the power management IC General Purpose Input/Output (PMIC GPIO) signal. During the partial reset, the power management circuit **20** PMIC GPIO signal remains at a high value and keeps the output of the OR gate, i.e. the reset control signal, also at a high value, thereby preventing the GPU **14** and display **12** from resetting and disrupting the user experience. Indeed, in the mobile wireless communications device **10,** the processor **16** may perform a partial reset without the user even noticing.

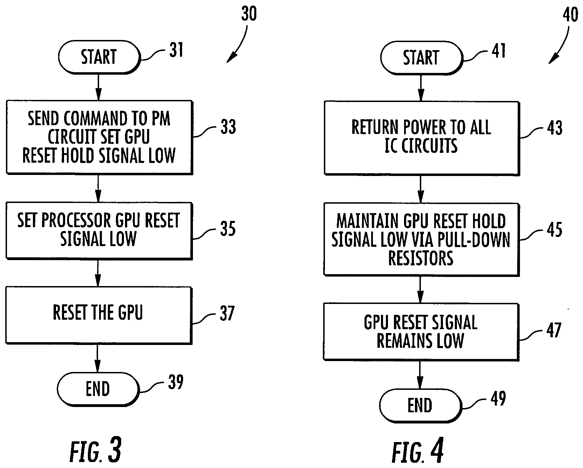

Referring now additionally to the flowchart **30** of FIG. 3, in situations where it may be desirable to force a GPU **14** and display **12** reset, the processor **16** begins at Block **31** and sends the power management circuit **20** a command to bring the GPU reset hold signal to a low value. (Block **33**). As will be appreciated by those skilled in the art, the processor **16** and the power management circuit **20** communicate using a multi-master serial computer bus based upon, for example, an inter-integrated circuit (I²C) standard. Of course, as will be appreciated by those skilled in the art, other communication standards may be used. The processor **16** sets the GPU reset signal to a low value, which now brings the reset control signal to a low value also, thereby resetting the GPU **14** and the display **12.** (Blocks **35, 37, & 39**).

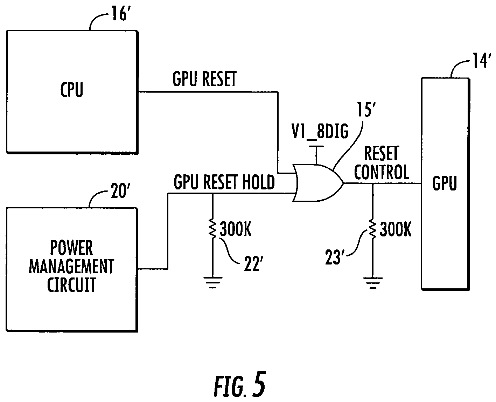

Referring now additionally to the flowchart **40** of FIG. 4, in this embodiment, the mobile wireless communications device **10** may include a pair of pull-down resistors (for example, 300 kΩ) coupled to the OR gate. In particular, one pull-down resistor (FIG. 5) is coupled to PMIC GPIO signal and the other pull-down resistor is coupled to the output of the OR gate. Advantageously, this maintains the reset control signal at a low value during a power-up operation of the mobile wireless communications device **10.** More specifically, as will be appreciated by those skilled in the art, it is desirable to maintain the display **12** in a reset state during the power-up operation, which begins at Block **41.** At power-up, (Block **43**), the PMIC GPIO signal is by default in an unconfigured state and the processor **16** GPU reset signal goes to a low value by default. Accordingly, the first pull-down resistor maintains the respective input of the OR gate at a low value, therefore keeping the reset control signal low during the power-up operation. (Block **45**).

Furthermore, the second pull-down resistor (FIG. 5) coupled to the output of the OR gate is used to maintain the output at a low value during the power-up operation. More particularly, the time period of concern is prior to 1.8 Volt power application to the OR gate. In other words, the second pull-down resistor keeps the OR gate output at a low value when the OR gate is not powered. (Blocks **47 & 49**). Of course, if the OR gate can maintain a low while being without power, then the second pull-down resistor may be omitted.

Referring now to FIG. 5, another embodiment of the mobile wireless communications device **10'** is now described. In this embodiment of the mobile wireless communications device **10',** those elements already discussed above with respect to FIGS. 1-2 are given prime notation and most require no further discussion herein. This embodiment differs from the previous embodiment in that the mobile wireless communications device **10'** further includes an OR gate **15'** receiving the GPU reset and the GPU reset hold signals and outputting the reset control signal to the GPU. Further, as discussed herein above, the mobile wireless communications device **10'** further includes a pair of pull-down resistors **22'-23'.**

Another aspect is directed to a method for making a mobile wireless communications device **10.** The method may include coupling a GPU **14** to a display **12,** the GPU being resettable and causing a change in the display when reset, and coupling a processor **16** to the GPU and a wireless transceiver **17** for wireless communications. The processor **16** may be resettable along with the GPU **14,** and the processor also may be partially resettable without resetting the GPU to avoid a change in the display **12.**

The mobile wireless communications device **10** described hereinabove may provide several benefits over the typical mobile wireless communications device. For example, mobile wireless communications device **10** experiences shorter reboot times and provides a more desirable user experience during a partial reset operation since the display **12** does not flicker or reset during aforesaid partial reset operations. Indeed, the user may be unaware that the mobile wireless communications device 10 has performed a fast reset operation.

Many modifications and other embodiments of the disclosure will come to the mind of one skilled in the art having the benefit of the teachings presented in the foregoing descriptions and the associated drawings. Therefore, it is understood that this disclosure is not to be limited to the specific embodiments disclosed, and that modifications and embodiments are intended to be included within the scope of the appended claims.

## Claims

1. A mobile wireless communications device (10) comprising:
a display (12);
a graphics processing unit (GPU) (14) being resettable and causing a change in said display when reset;
a wireless transceiver (17); and
a processor (16) cooperating with said GPU and said wireless transceiver for wireless communications;
said processor being resettable along with said GPU during a full reset thereof, and said processor also being partially resettable without resetting said GPU to avoid a change in said display, wherein the processor being partially resettable comprises the processor being configured to access a command to reset itself automatically without a user command, wherein said processor (16) has an output generating a GPU (14) reset signal during the partial reset of said processor; and further comprising
a power management circuit (20) configured to shut down power to said GPU and said processor (16) during the full reset thereof, but to maintain power to said GPU (14) and said processor during a partial reset of said processor; wherein said power management circuit (20) has an output generating a GPU reset hold signal, wherein the GPU reset hold signal is a power management IC general purpose input/output signal; and further comprising
a logic circuit (15) receiving as inputs the GPU reset signal and the GPU reset hold signal and outputting a reset control signal to said GPU; wherein said logic circuit (15) comprises an OR gate, and in which during a partial reset, the processor is configured to set the reset signal to a low value which is OR' ed with the GPU reset hold signal, and said power management IC general purpose
input/output signal remains at a high value and keeps **the** output of the OR gate, comprising the reset control signal, at a high value, thereby preventing the GPU (14) and display (12) from resetting.

2. The mobile wireless communications device (10) according to Claim 1 further comprising a rechargeable power supply coupled to said display, said GPU (14), said wireless transceiver ((17), and said processor (16) .

3. The mobile wireless communications device (10) according to Claim 1 further comprising a housing (11) carrying said display (12), said GPU (14), said wireless transceiver (17), and said processor (16).

4. The mobile wireless communications device (10) according to Claim 1 wherein said display (12) comprises a liquid crystal display.

5. The mobile wireless communications device (10) according to Claim 1 wherein said wireless transceiver (17) comprises a wireless cellular telephone transceiver.

6. A method for making a mobile
wireless communications device (10) comprising:
coupling a graphics processing unit (GPU) (14) to a display (12), the GPU being resettable and causing a change in the display when reset; and
coupling a processor to the GPU and a wireless transceiver (17) for wireless communications, the processor (16) being resettable along with the GPU during a full reset thereof, and the processor also being partially resettable without resetting the GPU to
avoid a change in the display, wherein the processor being partially resettable comprising the processor being configured to access a command to reset itself automatically without a user command; further comprising coupling a power management circuit (20) to the GPU (14) and the processor (16), the power management circuit being configured for shutting down power to the GPU and the processor during said full reset thereof, but maintaining power to the GPU and the processor during a partial reset of the
processor; wherein the processor (16) has an output generating
a GPU (14) reset signal during the partial reset of the processor; wherein the power management circuit (20) has an output generating a GPU reset hold signal, wherein the GPU reset hold signal is a power management IC general purpose input/output signal; and further comprising coupling a logic circuit (15) to receive as inputs the GPU reset signal and the GPU reset hold signal and to output a reset control signal to the GPU; wherein said logic circuit (15) comprises an OR gate, and wherein during a partial reset, the processor is configured to set the reset signal to a low value which is OR'ed with the GPU reset hold signal, and said power management IC general purpose input/output signal remains at a high value and keeps the output of the OR gate, comprising the reset control signal, at a high value, thereby preventing the GPU (14) and display (12) from resetting.

7. The method according to Claim 6 further comprising coupling a rechargeable power supply (21) to the display (12), the GPU (14), the wireless transceiver (17), and the processor (16).

8. The method according to Claim 6 further comprising providing a housing (11) to carry the display (12), the GPU (14), the wireless transceiver (17) and the processor (16).

## Patentansprüche

1. Mobile drahtlose Kommunikationsvorrichtung (10), umfassend:
eine Anzeige (12);
eine Grafikverarbeitungseinheit (GPU) (14), die rücksetzbar ist und beim Rücksetzen eine Änderung in der Anzeige verursacht;
einen drahtlosen Sende-Empfänger (17); und
einen Prozessor (16), der mit der GPU und dem drahtlosen Sende-Empfänger zur drahtlosen Kommunikation zusammenarbeitet;
wobei der Prozessor zusammen mit der GPU während einer vollständigen Rücksetzung davon rücksetzbar ist und wobei der Prozessor auch teilweise ohne Rücksetzen der GPU rücksetzbar ist, um eine Änderung in der Anzeige zu vermeiden, wobei die teilweise Rücksetzbarkeit des Prozessors umfasst, dass der Prozessor ausgelegt ist, auf einen Befehl zuzugreifen, um sich selbst automatisch ohne einen Benutzerbefehl rückzusetzen, wobei der Prozessor (16) einen Ausgang aufweist, der während der teilweisen Rücksetzung des Prozessors ein Rücksetzsignal für die GPU (14) generiert; und ferner umfassend
einen Energieverwaltungsschaltkreis (20), der ausgelegt ist, die Energie zur GPU und den Prozessor (16) während der vollständigen Rücksetzung dieser abzuschalten, aber während einer teilweisen Rücksetzung des Prozessors die Energie zur GPU (14) und zum Prozessor aufrechtzuerhalten; wobei der Energieverwaltungsschaltkreis (20) einen Ausgang aufweist, der ein GPU-Rücksetzungshaltesignal generiert, wobei das GPU-Rücksetzungshaltesignal ein Energieverwaltungs-IC-Universal-Eingabe-/Ausgabesignal ist; und ferner umfassend
einen Logikschaltkreis (15), der das GPU-Rücksetzsignal und das GPU-Rücksetzhaltesignal als Eingaben empfängt und ein Rücksetzsteuersignal an die GPU ausgibt; wobei der Logikschaltkreis (15) ein ODER-Gatter umfasst, und in dem der Prozessor während einer teilweisen Rücksetzung ausgelegt ist, das Rücksetzsignal auf einen niedrigen Wert zu setzen, der mit dem GPU-Rücksetzhaltesignal per ODER verknüpft wird, und
das Energieverwaltungs-IC-Universal-Eingabe-/Ausgabesignal auf einem hohen Wert bleibt und die Ausgabe des ODER-Gatters hält, die das Rücksetzsteuersignal auf einem hohen Wert umfasst, wodurch ein Rücksetzen der GPU (14) und der Anzeige (12) verhindert wird.

2. Mobile drahtlose Kommunikationsvorrichtung (10) nach Anspruch 1, ferner umfassend eine wiederaufladbare Energieversorgung, die an die Anzeige, die GPU (14), den drahtlosen Sende-Empfänger (17) und den Prozessor (16) gekoppelt ist.

3. Mobile drahtlose Kommunikationsvorrichtung (10) nach Anspruch 1, ferner umfassend ein Gehäuse (11), das die Anzeige (12), die GPU (14), den drahtlosen Sende-Empfänger (17) und den Prozessor (16) trägt.

4. Mobile drahtlose Kommunikationsvorrichtung (10) nach Anspruch 1, wobei die Anzeige (12) eine Flüssigkristallanzeige umfasst.

5. Mobile drahtlose Kommunikationsvorrichtung (10) nach Anspruch 1, wobei der drahtlose Sende-Empfänger (17) einen drahtlosen Mobilfunktelefon-Sende-Empfänger umfasst.

6. Verfahren zum Herstellen einer mobilen drahtlosen Kommunikationsvorrichtung (10), umfassend:
Koppeln einer Grafikverarbeitungseinheit (GPU) (14) an eine Anzeige (12), wobei die GPU rücksetzbar ist und beim Rücksetzen eine Änderung in der Anzeige verursacht; und
Koppeln eines Prozessors zur drahtlosen Kommunikation an die GPU und an einen drahtlosen Sende-Empfänger (17), wobei der Prozessor (16) zusammen mit der GPU während einer vollständigen Rücksetzung davon rücksetzbar ist, und wobei der Prozessor auch teilweise ohne Rücksetzen der GPU rücksetzbar ist, um eine Änderung in der Anzeige zu vermeiden, wobei die teilweise Rücksetzbarkeit des Prozessors umfasst, dass der Prozessor ausgelegt ist, auf einen Befehl zuzugreifen, um sich selbst automatisch ohne einen Benutzerbefehl rückzusetzen;
ferner umfassend ein Koppeln eines Energieverwaltungsschaltkreises (20) an die GPU (14) und den Prozessor (16), wobei der Energieverwaltungsschaltkreis ausgelegt ist, die Energie zur GPU und den Prozessor während der vollständigen Rücksetzung dieser abzuschalten, aber während eines teilweisen Rücksetzens des Prozessors die Energie zur GPU und zum Prozessor aufrechtzuerhalten;
wobei der Prozessor (16) einen Ausgang aufweist, der während der teilweisen Rücksetzung des Prozessors ein Rücksetzsignal für die GPU (14) generiert;
wobei der Energieverwaltungsschaltkreis (20) einen Ausgang aufweist, der ein GPU-Rücksetzungshaltesignal generiert, wobei das GPU-Rücksetzungshaltesignal ein Energieverwaltungs-IC-Universal-Eingabe-/Ausgabesignal ist; und ferner umfassend ein Koppeln eines Logikschaltkreises (15), um das GPU-Rücksetzsignal und das GPU-Rücksetzhaltesignal als Eingaben zu empfangen und ein Rücksetzsteuersignal an die GPU auszugeben; wobei der Logikschaltkreis (15) ein ODER-Gatter umfasst, und wobei der Prozessor während einer teilweisen Rücksetzung ausgelegt ist, das Rücksetzsignal auf einen niedrigen Wert zu setzen, der mit dem GPU-Rücksetzhaltesignal per ODER verknüpft wird, und das Energieverwaltungs-IC-Universal-Eingabe-/Ausgabesignal auf einem hohen Wert bleibt und die Ausgabe des ODER-Gatters hält, die das Rücksetzsteuersignal auf einem hohen Wert umfasst, wodurch ein Rücksetzen der GPU (14) und der Anzeige (12) verhindert wird.

7. Verfahren nach Anspruch 6, ferner umfassend ein Koppeln einer wiederaufladbaren Energieversorgung (21) an die Anzeige (12), die GPU (14), den drahtlosen Sende-Empfänger (17) und den Prozessor (16).

8. Verfahren nach Anspruch 6, ferner umfassend ein Bereitstellen eines Gehäuses (11), um die Anzeige (12), die GPU (14), den drahtlosen Sende-Empfänger (17) und den Prozessor (16) zu tragen.

## Revendications

1. Dispositif de communications sans fil mobile (10), comprenant :
un écran (12) ;
une unité de traitement graphique (GPU) (14) pouvant être réinitialisée et entraînant un changement dans ledit écran lors de sa réinitialisation ;
un émetteur-récepteur sans fil (17) ; et
un processeur (16) coopérant avec ladite GPU et ledit émetteur-récepteur sans fil pour des communications sans fil ;
ledit processeur pouvant être réinitialisé avec ladite GPU lors d'une réinitialisation complète de celle-ci et ledit processeur pouvant en outre être partiellement réinitialisé sans réinitialisation de ladite GPU pour éviter un changement dans ledit écran, dans lequel le processeur pouvant être partiellement réinitialisé comprend le processeur étant configuré pour accéder à une commande lui permettant de se réinitialiser lui-même automatiquement sans une commande utilisateur, dans lequel ledit processeur (16) a une sortie générant un signal de réinitialisation de GPU (14) lors de la réinitialisation partielle dudit processeur ; et comprenant en outre
un circuit de gestion d'alimentation (20) configuré pour arrêter l'alimentation de ladite GPU et dudit processeur (16) lors d'une réinitialisation complète de ceux-ci, mais pour maintenir l'alimentation de ladite GPU (14) et dudit processeur lors d'une réinitialisation partielle dudit processeur ; dans lequel ledit circuit de gestion d'alimentation (20) a une sortie générant un signal de maintien de réinitialisation de GPU, dans lequel le signal de maintien de réinitialisation de GPU est un signal d'entrée/de sortie universel IC de gestion d'alimentation ; et comprenant en outre
un circuit logique (15) recevant en tant qu'entrées le signal de réinitialisation de GPU et le signal de maintien de réinitialisation de GPU et délivrant un signal de commande de réinitialisation à ladite GPU ; dans lequel ledit circuit logique (15) comprend une porte OR et dans lequel lors d'une réinitialisation partielle, le processeur est configuré pour régler le signal de réinitialisation sur une valeur faible associée à OR avec le signal de maintien de réinitialisation de GPU, et ledit signal d'entrée/de sortie universel IC de gestion d'alimentation reste à une valeur élevée et maintient la sortie de la porte OR, comprenant le signal de commande de réinitialisation, à une valeur élevée, empêchant ainsi la réinitialisation de la GPU (14) et de l'écran (12).

2. Dispositif de communications sans fil mobile (10) selon la revendication 1, comprenant en outre une source d'alimentation rechargeable couplée audit écran, à ladite GPU (14), audit émetteur-récepteur sans fil (17) et audit processeur (16).

3. Dispositif de communications sans fil mobile (10) selon la revendication 1, comprenant en outre un boîtier (11) supportant ledit écran (12), ladite GPU (14), ledit émetteur-récepteur sans fil (17) et ledit processeur (16).

4. Dispositif de communications sans fil mobile (10) selon la revendication 1, dans lequel ledit écran (12) comprend un écran à cristaux liquides.

5. Dispositif de communications sans fil mobile (10) selon la revendication 1, dans lequel ledit émetteur-récepteur sans fil (17) comprend un émetteur-récepteur de téléphone cellulaire sans fil.

6. Procédé de fabrication d'un dispositif de communications sans fil mobile (10), comprenant :
le couplage d'une unité de traitement graphique (GPU) (14) à un écran, la GPU pouvant être réinitialisée et entraînant un changement dans l'écran lors de sa réinitialisation ; et
le couplage d'un processeur à la GPU et à un émetteur-récepteur sans fil (17) pour des communications sans fil, le processeur (16) pouvant être réinitialisé avec la GPU lors d'une réinitialisation complète de celle-ci, et le processeur pouvant en outre être partiellement réinitialisé sans réinitialisation de la GPU pour éviter un changement dans l'écran, dans lequel le processeur pouvant être partiellement réinitialisé comprend le processeur étant configuré pour accéder à une commande lui permettant de se réinitialiser automatiquement sans une commande utilisateur ; comprenant en outre le couplage d'un circuit de gestion d'alimentation (20) à la GPU (14) et au processeur (16), le circuit de gestion d'alimentation étant configuré pour arrêter l'alimentation de la GPU et du processeur lors de ladite réinitialisation complète de ceux-ci mas maintenant l'alimentation de la GPU et du processeur lors d'une réinitialisation partielle du processeur ; dans lequel le processeur (16) a une sortie générant un signal de réinitialisation de GPU (14) lors de la réinitialisation partielle du processeur ; dans lequel le circuit de gestion d'alimentation (20) a une sortie générant un signal de maintien de réinitialisation de GPU, dans lequel le signal de maintien de réinitialisation de GPU est un signal d'entrée/de sortie universel IC de gestion d'alimentation ; et comprenant en outre le couplage d'un circuit logique (15) pour recevoir en tant qu'entrées le signal de réinitialisation de GPU et le signal de maintien de réinitialisation de GPU et pour délivrer un signal de commande de réinitialisation à la GPU ; dans lequel ledit circuit logique (15) comprend une porte OR, et dans lequel lors d'une réinitialisation partielle, le processeur est configuré pour régler le signal de réinitialisation sur une valeur faible associée à OR avec le signal de maintien de réinitialisation de GPU, et ledit signal d'entrée/de sortie universel IC de gestion d'alimentation reste à une valeur élevée et maintient la sortie de la porte OR, comprenant le signal de commande de réinitialisation, à une valeur élevée, empêchant ainsi la réinitialisation de la GPU (14) et de l'écran (12).

7. Procédé selon la revendication 6, comprenant en outre le couplage d'une source d'alimentation rechargeable (21) à l'écran (12), à la GPU (14), à l'émetteur-récepteur sans fil (17) et au processeur (16).

8. Procédé selon la revendication 6, comprenant en outre la fourniture d'un boîtier (11) pour supporter l'écran (12), la GPU (14), l'émetteur-récepteur sans fil (17) et le processeur (16).
